(19) Europäisches Patentamt
European Patent Office
Office européen des brevets

(11) **EP 3 040 853 B1**

(12) **EUROPEAN PATENT SPECIFICATION**

(45) Date of publication and mention of the grant of the patent:
**19.12.2018 Bulletin 2018/51**

(51) Int Cl.:
**G06F 7/58** (2006.01)   **G06N 99/00** (2010.01)
**H04L 9/08** (2006.01)

(21) Application number: **15203091.2**

(22) Date of filing: **30.12.2015**

(54) **METHOD AND APPARATUS FOR GENERATING A SEQUENCE OF RANDOM BITS**

VERFAHREN UND VORRICHTUNG ZUM ERZEUGEN EINER ZUFALLSBITFOLGE

PROCÉDÉ ET DISPOSITIF POUR GÉNÉRER UNE SÉQUENCE DE BITS ALÉATOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2014 IT TO20141126**

(43) Date of publication of application:
**06.07.2016 Bulletin 2016/27**

(73) Proprietor: **Università degli Studi di Padova 35122 Padova (IT)**

(72) Inventors:
• **VILLORESI, Paolo**
  **I-35122 Padova (IT)**
• **MARANGON, Davide Giacomo**
  **I-35010 Vigodarzere (PD) (IT)**
• **VALLONE, Giuseppe**
  **I-35137 Padova (IT)**

(74) Representative: **Lisa, Elisabetta et al**
**Praxi Intellectual Property S.p.A.**
**Corso Vittorio Emanuele II, 3**
**10125 Torino (IT)**

(56) References cited:
**US-A1- 2014 337 400     US-B1- 7 284 024**

• **CHRISTIAN GABRIEL ET AL: "A generator for unique quantum random numbers based on vacuum states", NATURE PHOTONICS, vol. 4, no. 10, 29 August 2010 (2010-08-29), pages 711-715, XP055211918, ISSN: 1749-4885, DOI: 10.1038/nphoton.2010.197**
• **J. Shapiro ET AL: "Phase and amplitude uncertainties in heterodyne detection", IEEE JOURNAL OF QUANTUM ELECTRONICS., vol. 20, no. 7, 1 July 1984 (1984-07-01), pages 803-813, XP055364757, USA ISSN: 0018-9197, DOI: 10.1109/JQE.1984.1072470**

**Description**

## TECHNICAL FIELD

The presented invention is related to devices and methods to generate random numbers.

In particular, the invention is related to a quantum generator of random numbers, namely a generator that exploits the measurement of quantum phenomena.

The invention finds application in various fields of Science and Information Technology, where there is a need for methods of generating fast and secure random numbers to be used for the generation of cryptographic keys and/or to numerical simulations. For example, the invention finds application in generating random numbers for the devices used in betting games.

## PRIOR ART

Nowadays, random numbers are widely used, both for the generation of cryptographic keys, both for the use in gaming machines, both for methods, such as the Monte Carlo method, which carry a high number of simulations to simulate the behavior of a system.

Some random number generators are algorithm based and may be implemented by software. As easy to implement and inexpensive, these generators are only apparently generators of true random numbers.

There exist also random number generators that exploit the measurement of some classical observable, such as temperature or voltage, on systems characterized by noisy fluctuations of these quantities. These generators are certainly more secure than algorithm-based generators and allow to obtain numbers with a greater degree of randomness. However, since they are based on the principles of classical physics, the output of these generators is, at least in principle, predictable by deterministic algorithms.

In recent years, new random number generators (called Quantum Random Number Generator, abbreviated QRNG) based on the measurement of some observable on a quantum system have been developed. As these generators exploit quantum systems, and therefore inherently statistical, they offer a better security from the point of view of the unpredictability of the generated numbers. An example of these generators is disclosed in the U.S. Patent no. US 7,284,024 B1, (reference [3]), which shows a quantum noise random number generator system that employs quantum noise from an optical homodyne detection apparatus.

The existing state-of-the-art QRNG can be divided into two categories: discrete variables (DV-QRNG) and continuous variable (CV-QRNG) generators. The DV-QRNGs exploit the measurement of discrete physical variables, such as the number of photons recorded by a detector, while the CV-QRNGs measure continuous physical variables such as the quadratures of the electro-magnetic field.

The CV-QRNGs guarantee generation rates that are orders of magnitude larger than the DV-QRNGs, i.e. tens of Gigabits/s for the CV-QRNG compared to the tens of Mbit/s of the DV-QRNG.

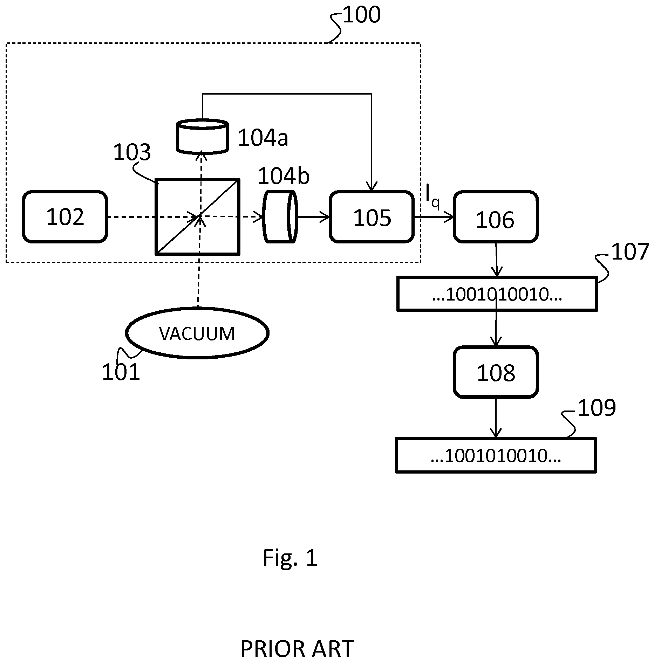

An example of a CV quantum random number generator, e.g. known from reference [3], is illustrated in Figure 1. The generator includes a homodyne receiver 100 that measures the vacuum state of the electromagnetic field 101. The homodyne receiver 100 includes a local oscillator 102, typically a laser, which interferes with the vacuum signal 101 on a beam-splitter 103, e.g. prism, and generate two output signals that are detected by two amplitude detectors 104a and 104b, for example two photodiodes. A device 105 implements the difference of the output signals of the two amplitude detectors, and its output current $I_q$ is proportional to the amplitude of the quadrature observable measured on the vacuum signal. A sampler 106 samples the output of the homodyne receiver 100, namely the current $I_q$, and generates the output sequence of bits 107 that represents the amplitude of the current $I_q$. In the example of Figure 1, in order to eliminate the predictability of the numbers associated with the classic noise of the homodyne receiver hardware, a post-processing step is performed wherein a processor 108 uses an algorithm to eliminate such noise and generates in output a stream of random bits 109 whose randomness is due to the unpredictability of the quantum measurement.

The algorithm used by the processor 108 is called "randomness extractor" and it is applied to a sequence of bits to improve the uniformity and independence. To this purpose, the extractor is calibrated such as to extract from the sequence of bits in input, a fraction of bits proportional to the value of the classical min-entropy $H_{min}$ of the sequence, where

$$H_{min}(Y) = - max_y(\log_2 p(Y))$$

and p(Y) is the probability of correctly guessing the value of the observed random variable Y, and, in our case , corresponds to the probability of guessing a group of bits of the sequence.

Examples of CV-QRNG based on homodyne receivers that measures observable on the vacuum state of the electromagnetic field are described in references [1], [2], [3] and [4] listed below the present description.

These quantum random number generators have some limitations, since they do not consider the possible loss of information, classical or quantum, due to the impurity of the measured state. In particular, also the application of the above cited post-processing methods based on the classical min-entropy and, therefore, applying a post-processing algorithm that reduces the length of the sequence of bits in a corresponding manner, does not take into account possible quantum correlations of the input quantum system with other quantum systems that could be used by an adversary to obtain information useful to guess the generated numbers.

**OBJECTS AND SUMMARY OF THE INVENTION**

The objective of the present invention is to overcome the prior art drawbacks.

In particular, the objective of the present invention is to present a generator of random numbers with high randomness.

This and other objectives of the present invention are achieved by a random number generator and a method for generating a stream of random bits, embodying the characteristics of the annexed claims, since they are an integral part of the present description.

The general idea underlying the present invention is the measurement of two incompatible (in the framework of Quantum Mechanics) observables, such as time and position or phase and amplitude, of an electromagnetic field in a given quantum state.

The measurements performed on the first observable are used to generate the raw random numbers. These numbers are defined as raw as they may be not completely random, for instance when the quantum state of the system was not pure, as in the case of the partial control of the quantum state by a third party. The measurements carried out on the second observable, incompatible with the first according to Quantum Mechanics, are used to estimate the conditional min-entropy of the random variable associated with the first observable, that is, the minimum number of truly random bits extractable from such variable and that are independent of any opponent who holds a system that is quantum correlated with the measured system. The measurement of the second observable are carried randomly: at random times the generation of raw random numbers from the measurement of the first observable stops and a second observable, incompatible with the first, is measured. Once the measurement of the second observable is performed, the first observable is measured again. The measurement of the second observable are made in arbitrary number but less than the number of measurement that are made on the first observable. However, the greater the number of measurements of the second observable are, the greater the degree of accuracy of the estimation of the quantum conditional min-entropy is. A randomness extractor algorithm (for example those based on two-universal hash functions) is calibrated on the value of such conditional min-entropy to process the bits obtained from the measurement of the first observable. The bit sequence obtained at the output of the algorithm will be shorter than the raw sequence and will be proportional to the purity degree of the system state.

This solution allows to obtain truly random numbers, reducing (at limit eliminating) not only the contribution of the classical noise such as thermal noise (which in principle is deterministic) but also the non-casual bits that may be predicted by having a quantum system that is quantum correlated with the physical system used to generate the numbers.

The measurements of two incompatible observables can occur simultaneously (introducing noise) or by alternating between the two measurements. Preferably, the two observables are measured alternately: the switch between the two measurements must be performed in a random way. The number of measurements performed on the observable used to estimate the conditional min-entropy is lower than the number of measurement performed on the observable used to generate raw random numbers.

In one embodiment, the random number generator comprises means for measuring two continuous observables of an electromagnetic field prepared in a quantum state, and means for obtaining, from the measurement of each observable, a first and a second sequence of bits. The first sequence of bits is used to generate the raw random numbers. The generator comprises a processor that, by using the bits of the second sequence, calculates the conditional min-entropy of the random variable associated with the first sequence.

A post-processing unit, by applying randomness extractor algorithms to the first sequence of raw bits, generates a string of random bits shorter than the initial one. The extractor algorithm eliminates the fraction of the bits that could be predicted by an adversary and it is based on the estimate of the conditional min-entropy performed by using the second sequence. The output of the post-processing unit is therefore a sequence of random bits that can be used in a data signal, such as a signal carrying a cryptographic key.

According to one embodiment, a random number generator includes a homodyne or heterodyne receiver, in which a laser is used as the local oscillator of the receiver and it interferes with a given electromagnetic signal, in particular the vacuum signal. A sampler samples the output current of the receiver and generates at the output a sequence of bits corresponding to a binary coding of the sample. The generator further includes a phase modulator capable of varying the phase of the local oscillator. The modulator is controlled to vary, in a random but controlled way, the phase of the local oscillator between two values, 0 and $\frac{\pi}{2}$. The measurements related to the phase $\frac{\pi}{2}$ correspond to an observable, those relating to the phase 0 are related to the second observable.

The generator comprises a calculation unit configured to calculate the conditional minimum entropy of the random variable associated with the first observable (e.g. that one obtained without varying the phase of the laser beam) of the electromagnetic field that is in input into the homodyne receiver. A post-processing unit then provides to extract a sequence of unpredictable bits: such sequence cannot be predicted even in case an adversary has control on a system correlated with the quantum system used to generate the numbers.

In one embodiment, the random number generator comprises two receivers (heterodyne), which share a same local oscillator and the same input signal, and two samplers capable of sampling the output currents of the two receivers. In this way the random number generator is capable of simultaneously measuring two incompatible observables, in the sense of Quantum Mechanics, of the electromagnetic field in input to the two generators and generating two corresponding sequences of bits. A calculation unit is configured to calculate the conditional minimum entropy of the random variable associated to a first observable of the electromagnetic field in input to one of the homodyne receivers. On the basis of the measurements performed on the other observable through the other receiver, the post-processing unit then provides to extract a sequence of unpredictable bits that cannot be predicted even in case an adversary has control on a system correlated with the quantum system used to generate the numbers.

Further purposes and advantages of this invention will be detailed in the following description and in the annexed claims.

## BRIEF DESCRIPTION OF THE DRAWINGS

The invention will be described below with reference to non-limiting examples, provided by way of example and not as a limitation in the annexed drawings. These drawings show different aspects and embodiments of the invention and, where appropriate, reference numerals showing like structures, components, materials and/or elements in different figures are denoted by like reference numerals.

Figure 1 shows a quantum random number generator according to the prior art;
Figure 2 illustrates a flow diagram of a method that allows to generate random numbers according to the present invention;
Figure 3 illustrates a quantum squeezed state of the vacuum signal;
Figure 4 illustrates a generator of quantum numbers according to an embodiment of the present invention;
Figure 5a shows the output current of a subtractor device of the generator of Figure 4;
Figure 5b illustrates the result of the sampling of the current of Figure 5a;
Figure 5c illustrates the binary encoding of the sampling of Figure 5b;
Figure 6 illustrates a quantum random number generator alternative to that of Figure 4.

## DETAILED DESCRIPTION OF THE INVENTION

While the invention is susceptible of various modifications and alternative forms, some preferred non-limitative embodiments, provided by way of example, are described below in detail. It should be understood, however, that there is no intention to limit the invention to the specific embodiments disclosed, but, on the contrary, the intention of the invention is to cover all modifications, alternative constructions and equivalents falling within the scope of the invention as defined in the claims.

Therefore, in the description below, the use of "for example", "etc", "or" indicates non-exclusive alternatives without limitation unless otherwise defined; the use of "also" means "among which, but not limited to", unless otherwise defined; the use of "include/comprise" means "include/comprise, but not limited to," unless otherwise defined.

The term quadrature or "quadrature operator" of an electromagnetic field means the measuring operator made by combination of the so-called creation and destruction operators of the electromagnetic field: such operators measure incompatible observables and are commonly identified such as measuring operators for the momentum and for the position of the electromagnetic field.

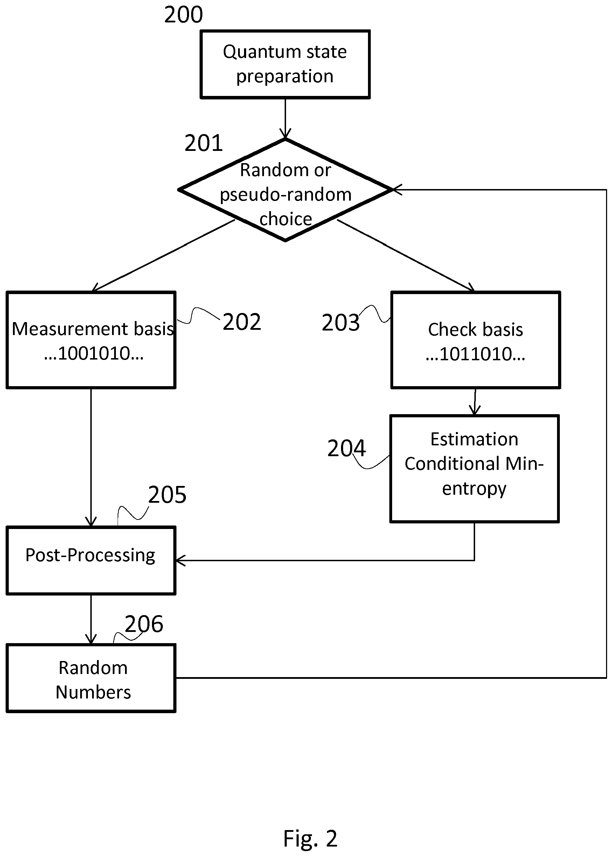

Figure 2 shows a flow diagram of a method for generating a digital signal obtained with random bits. The method involves the use of a device that performs measurements on a quantum system of infinite dimensions with the dual purpose of generating random numbers and reduce as much as possible, ideally eliminate, any possible correlation between these numbers and other systems.

The measurements are made on quantum observable that are not commuting. The observables have two properties: the first property is that they have continuous spectrum (their results can therefore have any real value) or a spectrum that can be infinite, but countable. The second property is that the bases of projection of the operators that represent the observables, are mutually incompatible.

With reference to the example of Figure 2, the method consists in the preparation (step 200) of a quantum system in a precise quantum state and then measured in two basis that are not compatible in the sense of Quantum Mechanics; to obtain the maximum amount of randomness the system must be prepared in the eigenstate of one of the two basis, but randomness can be extracted also from quantum states that are not eigenstates of the measurement basis. In the following examples, the quantum system is constituted by the quantum modes of an electromagnetic field. The states of the system may be Gaussian such as: coherent states, squeezed coherent states, vacuum states, squeezed vacuum states.

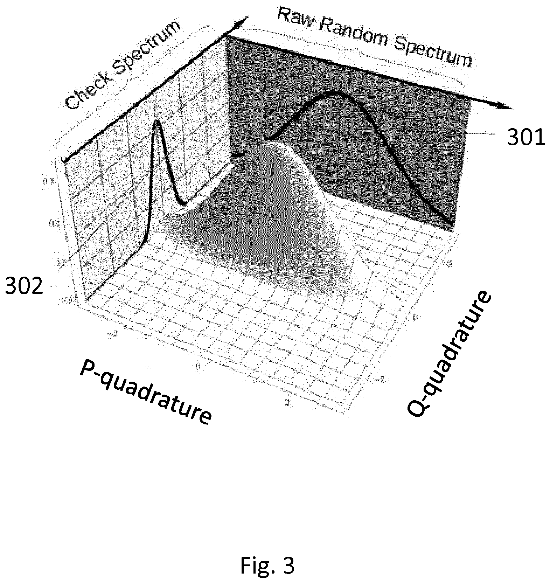

In a possible embodiment, illustrated in figure 3, the input quantum state that is considered is a squeezed vacuum state described by the quadrature operators p e q that may be associated with momentum and position observables (or phase and amplitude) of an electromagnetic field, in this case the vacuum. In the example of Figure 3, the output of the measurement of operator quadrature $\hat{q}$ is squeezed with respect to a vacuum state: the eigenstates of the operator $\hat{q}$ (as discussed in more detail below) will be used as control base and the related eigenvalues will be used to estimate the conditional minimum entropy.

The state is widen with respect to the quadrature operator $\hat{p}$ : the eigenstates of the operator $\hat{p}$ (as discussed in more detail below) will be used as measurement base and the related eigenvalues will be used for the generation of the random numbers/bits. It is important to note that in principle the spectrum of possible eigenvalues is infinite and continuous. However, the devices used are characterized by a finite measurement accuracy and a finite range of possible outputs. Consequently the spectrum of possible eigenvalues $q$ and $p$ turns out to be finite and countable.

To these eigenvalues an index $i$ will therefore be attributed, this index taking values in the discrete finite set {0,1,...,n-1}. The maximum number n of eigenvalues that can be measured for a given base is obtained by dividing the maximum range of the measuring device, by the minimal achievable precision of the device itself. Lower values of n can be obtained by considering integer multiples of the minimal accuracy, or the sub-multiples of the maximum range. At step 200, the method provides to configure the system to observe the quadrature operator $\hat{p}$ of the measured electromagnetic field. With respect to Figure 3, this means to observe the projection 301 of the state onto the eigenspace relative to $\hat{p}$. The choice of which quadrature operator has to be measured is random, and it is performed by using a fraction of the bits produced by the generator (step 201). For its first use, the generator must have a series of numbers preloaded which can provide a first set of inputs for the random switching between the bases. Afterwards, part of the generated bits is used to select the bases in the next steps.

Two data sequences are thus obtained, in an alternate way, (preferably digitally expressed in sequences of bits) resulting from the measures of the two operators:

- the first sequence (202), denominated measurement base, is used to generate a stream of random bits,
- the second sequence (203), denominated control base, is used to control the system and improve the degree of randomness of the bits.

At step 204, the method provides to calculate the minimum conditional entropy of the random variable P associated to the spectrum of eigenvalues p of $\hat{p}$. Assuming that the measurement of $\hat{p}$ gives rise to the measurement base. To obtain this estimate, the results of the measurements obtained on the control base associated to the operator $\hat{q}$ are used. By means of these measurements, the relative probabilities $Pr(Q = q_i)$ can be estimated (as will be explained below) of the eigenvalues of $q_i$ of $\hat{q}$. The relative probabilities are then used to estimate the maximum entropy, that is the quantity which is used to estimate a lower limit to the minimum conditional entropy by means of the relation (1).

Given a state $\omega$ of the electromagnetic field, the conditional min-entropy of the measurement base ($H_{min}$(P|E)$\omega$), namely the uncertainty associated with the random variable P operator $\hat{p}$ evaluated by an observer of a system E external to the measurement system, it is preferably calculated as follows:

$$H_{min}(P|E)_\omega \geq log_2 \left( \frac{h}{\delta q \delta p} R_{00} \left( 1, \frac{\delta q \delta p}{4} \right)^{-1} \right) - H_{max}(Q)_\omega \qquad (1)$$

Where

$$H_{max}(Q)_\omega = 2\, log_2 \left( \sum_{i=0}^{n-1} \sqrt{Pr(Q = q_i)} \right) \qquad (2)$$

is the maximum entropy of the random variable Q associated to the operator $\hat{q}$ for the state $\omega$ and it corresponds to the Renyi entropy of order 1/2 of that variable, where $\delta p$ and $\delta q$ are the uncertainties of the measurement of $\hat{p}$ and $\hat{q}$ which

depend on both the measurement equipment, and on the sampling resolution adopted to sample the continuous analog information of the quadrature operators. The term $R_{00}\left(1, \frac{\delta q \delta p}{4}\right)$ is the so-called radial prolate spheroidal wave function of the first kind. The inequality (1) is derived from the inequality n. 105 of Reference [5], by adapting that inequality to the case of a random number generator, that is by considering trivial the quantum system "B" of Reference [5].

Note that for a fixed precision $\delta q$, the greater the number of measurements, the greater the degree of accuracy with which the maximum entropy $H_{max}(Q)\omega$ is estimated and therefore the lower the limit to the conditional minimum entropy. The value of the conditional minimum entropy calculated from the control base, is used in the post-processing step (step 205) of the measurement base. This step, as will be explained in more detail below, requires to calibrate an algorithm for randomness extraction (for example those based on two-universal hash functions) as a function of the value of the lower limit estimated for the conditional minimum entropy, in order to process (step 206) the raw bits obtained from the measurements on the measurement base. The bit string that will be obtained as output from the algorithm will be shorter than the initial one in proportion to the degree of purity of the state of the system. For example, if the conditional minimum entropy is equal to 10%, the algorithm outputs has an amount of bits equal to 10% of the bits present in the measurement base.

In this way one gets a sequence of random bits shorter than the raw sequence obtained from the measurement base, but with a greater degree of randomness. These bits can be inserted into a signal, e.g. a signal to be used as a cryptographic key.

In the example of Figure 2, the sequence of random bits generated at step 206 is used to select the basis in step 201.

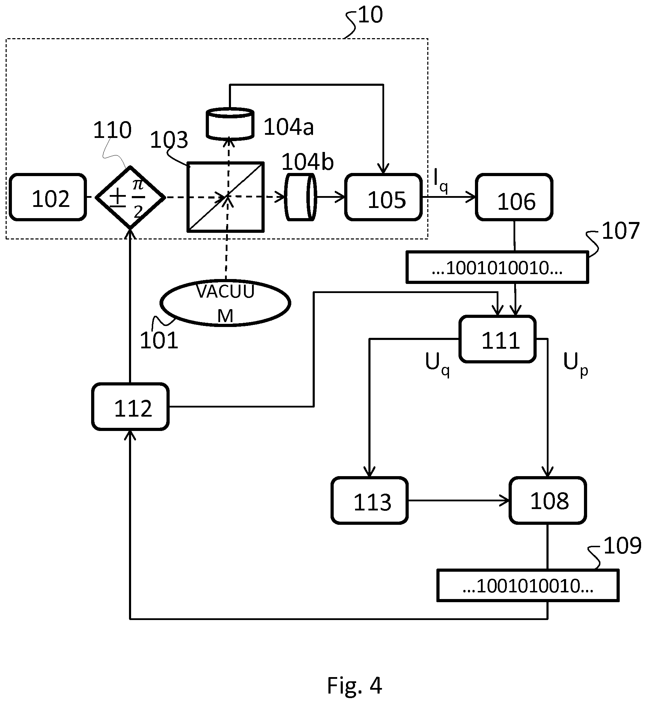

In figure 4 a block diagram it is shown of an apparatus 1 for generating random numbers able to implement the method of Figure 2.

The apparatus 1 comprises a homodyne receiver 10 designed to receive an electromagnetic signal 101 (in the example described here represented by the empty signal of Figure 3) and to provide an output current $I_q$ which depends on the quantum state of the electromagnetic signal received.

The homodyne receiver 10 comprises a local oscillator 102 which generates an electromagnetic wave with a stable frequency; in the preferred embodiment described below, the local oscillator 102 is a laser that generates a coherent light beam. A phase modulator 110, for example an externally controlled electro-acoustic modulator, e.g. by means of a voltage input, causes a phase shift of 0 or $\pi / 2$ to the light beam generated by the laser 102, thus enabling to measure alternately the two quadratures $\hat{p}$ and $\hat{q}$ of the input signal 101.

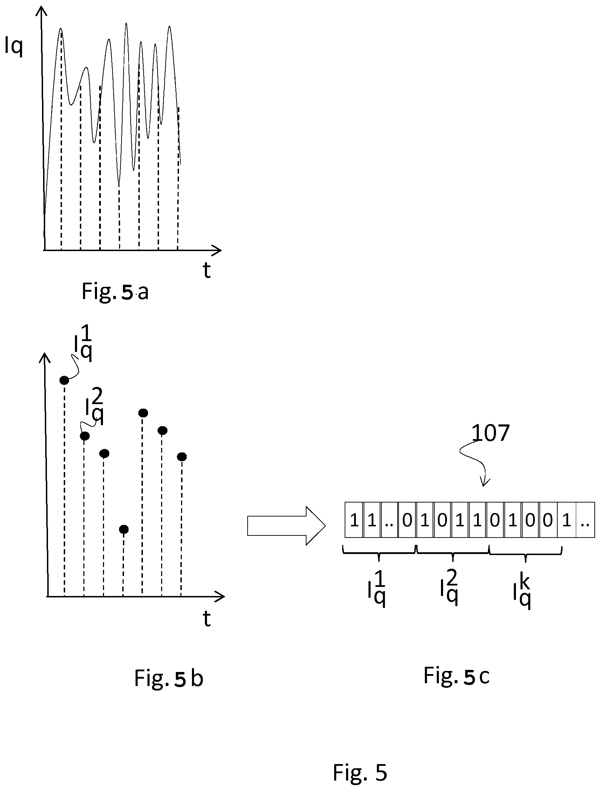

By means of a beam splitter 103 a polarized laser beam is mixed and interferes with the empty signal 101, where it is divided into two beams F1 and F2 that are detected by respective amplitude detectors 104a and 104b, e.g. photodiodes. The output signal of the two amplitude detectors is subtracted in a subtractor module 105, whose output current $I_q$ is an analogical signal, represented in figure 5a, whose amplitude is proportional to the amplitude of the quadrature $\hat{p}$ and $\hat{q}$ of the empty state signal.

A sampler 106 samples the current $I_q$ thus obtaining samples $I_q^k$ shown in Figure 5b. The amplitude value of each sample $I_q^k$ is converted in a binary code, or a sequence of bits representative of the amplitude of the sample as shown in Figure 5c. For example, in one embodiment, the sampler 106 uses a system of 4 bits, so the amplitude of each sample $I_q^k$ is associated to a word of 4 bits, eg. 0001. The output of the sampler 106 then will be a bit stream 107 which depends on the quadrature operator measured. In this embodiment, the sampler uses the same encoding for both the sampling of the operator $\hat{p}$ and the operator $\hat{q}$, however, in the case of a quantum state squeezed as that of Figure 3, it is possible and preferable to use different encodings. For example, in the case of a quantum state as the one in Figure 3, the state is squeezed with respect to the operator $\hat{q}$, therefore it is possible to use digital conversion in 2 bits to encode the values of the samples $I_q^k$ associated with that operator, and an encoding of 4 bits to encode sample values $I_q^k$ associated operator $\hat{p}$.

By means of a switch 111 placed at the output of the sampler 106, the bit stream 107 is transmitted alternately to two different outputs to be treated differently.

The diverter 111 is controlled by a control block 112 which also controls the phase modulator 110: in this way when the phase modulator is configured to change the phase of the local oscillator 102, for example, to bring it to the value of $+\frac{\pi}{2}$, the switch 111 transmits the bit stream 107 towards the output $U_p$, while when the phase modulator is controlled to obtain a phase value equal to 0, the bit stream 107 is directed towards the output $U_q$. By changing the phase of the laser 102 between 0 and $\frac{\pi}{2}$ the homodyne receiver 10 measures alternately the two quadrature operators $\hat{p}$ and $\hat{q}$, so the bit stream 107 output of the sampler 106 corresponds to a sequence of measurements made on the operator $\hat{p}$ or on $\hat{q}$, depending on whether or not the modulator imposes a phase 110.

As previously mentioned with reference to the method of Figure 2, the bit sequence resulting from the measurement of one of the two quadrature operators (e.g. $\hat{q}$) is used as control base, while the bit sequence resulting from the measure of the other quadrature operator (eg. $\hat{p}$) is used as the measurement basis for the generation of random numbers.

Depending on the phase chosen, and on the quadrature operator measured, the switch 111 transmits the input bits towards the corresponding output: $U_q$ for the measurements of the operator $\hat{q}$, and $U_p$ for the measurements of the operator $\hat{p}$. The bits at the output $U_q$, which corresponds to the control base, are received at input of the calculation unit 113 which calculates the conditional minimum entropy according to formula (1), and provides the calculated parameter to the post-processing unit 108.

The post-processing unit 108 applies an algorithm to the input bits received from the switch 111. This algorithm is calibrated as a function of the lower limit for the estimated conditional minimum entropy. In detail, the post processing unit receives as input the bits corresponding to the measurement base, that is those bits that represent a sequence of measurements made on the quadrature operator $\hat{p}$. In order to improve the randomness of the bits, as already described with reference to Figure 1, the post-processing unit 108 uses an algorithm called "randomness extractor", which generates as output a stream of random bits 109 whose randomness essentially depends on quantum properties. In the scheme of Figure 4, the input bits are reduced as function of the value of the conditional min-entropy calculated by the calculation unit 113.

In other words the sequence of random bits 109 is generated by providing as input to the randomness extractor algorithm of the post-processing unit 108 the bit sequence 107 and a parameter which determines the degree of randomness of the bit sequence 109. The parameter supplied as an input to the randomness extractor algorithm 108 depends on the value of the maximum entropy of a random variable associated with the sequence of samples $U_q$, and it allows to generate a bit sequence 109 with a higher degree of randomness with respect to the first bit sequence.

The bit stream 109 is then inserted into a signal, e.g. as the payload of an IP data packet.

At the same time, the bit stream 109, with high randomness, is used as input of the control block 112. The latter, is a switch whose output toggles between two values (e.g. $\pm$ 5V) such as to control the switching of the phase modulator 110 between two different states (0 or $\frac{\pi}{2}$ ). In a possible embodiment, the block 112 may be constituted by an electro-optical modulator.

Therefore it is clear for a person skilled in the art that it is possible to make changes and modifications to the solution described with reference to figures mentioned above without for this reason departing from the scope of protection of the present patent as defined in the annexed claims.

For example, in one embodiment, the measurement of the quadrature operators may take place through a heterodyne receiver instead of the described homodyne one. For the purposes of the present invention, it is indeed important to measure two quadrature operators of the type described above, the measurement method is less important, even if some methods better than others allow to avoid the introduction of noise which could reduce the randomness of the numbers.

In one form of alternative implementation, the method performs a simultaneous measurement of the two quadrature operators, such that one the measurement base and the control base are obtained simultaneously. In this case the quantum correlation between the two observables becomes greater compared to the one presented in the embodiment previously described.

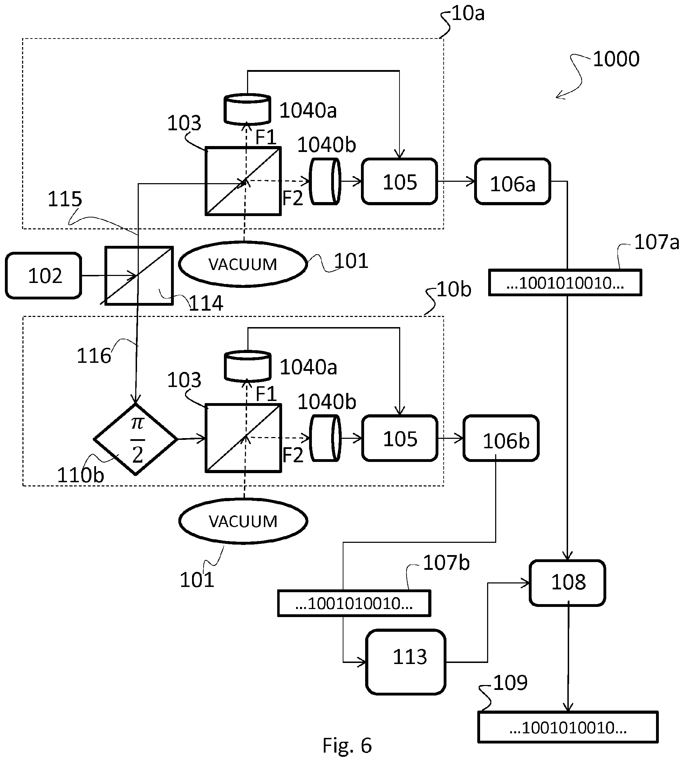

In regards of the apparatus, the simultaneous measurement of the two quadrature operators can be obtained with an apparatus 1000 of the type described in Figure 6. The apparatus 1000 differs essentially from the apparatus 1 of Figure 4, for the presence of two homodyne receivers (10a and 10b) that use the same laser 102. By means of a beamsplitter 114, the laser beam 102 is split into two separate beams (115, 116) which follow two different optical paths.

Along one of the two optical paths, a phase modulator (110b) is interposed which introduces a phase shift of $\frac{\pi}{2}$ (positive or negative does not matter) with respect to the other beam. The beam 115 and the polarized one 116, are then measured in the same manner as described with reference to Figure 4, that is by dividing the beam into two parts using a beamsplitter 103 and by subtracting the measured currents by means of two amplitude detectors 104a and 104b respectively.

The outputs of the two homodyne detectors 10a and 10b are then sampled by the respective samplers 106a and 106b such to obtain two sequences of random bits 107a and 107b that are respectively sent to the post-processing unit 108 and the calculation unit 113 for the relative elaborations, already discussed above.

To someone skilled in the art it is also clear that the measurement of two observables described in the above examples, can be a measure of heterodyne type, known per se (eg. In [6] and [7]), and thus, here not described in detail.

Moreover, despite in the above examples reference was made to the quadrature measurement of the electromagnetic field, the generation of random numbers can be obtained also by measuring other observables, e.g. energy and time or orbital angular momentum and angle.

REFERENCES

[1] C. Gabriel, C. Wittmann, D. Sych, R. Dong, W. Mauerer, U. L. Andersen, C. Marquardt, and G. Leuchs, Nat. Photonics 4, 711 (2010).
[2] T. Symul, S. M. Assad, and P. K. Lam, Appl. Phys. Lett. 2 (2011).
[3] United States Patent n. US7284024
[4] Y. Shen, L. Tian and H. Zou, Physical Review A, 81 (2010)
[5] F. Furrer, M. Berta, M. Tomamichel, V. B. Scholz, and M. Christandl, J. Math. Phys. 55, 122205 (2014).
[6] J. Shapiro and S. Wagner, IEEE J. Quantum Electron. 20, 803 (1984).
[7] Haus, Hermann A. Electromagnetic noise and quantum optical measurements. Springer Science & Business Media, 2000.

**Claims**

1. A method for generating a signal comprising a sequence of random bits, comprising the steps of:

   - measuring (202) a first quadrature $\hat{p}$ of an electromagnetic field,
   - sampling the measurement of the first quadrature $\hat{p}$ so as to obtain a first sequence of samples,
   - generating a first sequence of bits by means of a binary encoding of the first sequence of samples,
   - measuring (203) of a second quadrature $\hat{q}$ of the electromagnetic field,
   - sampling the measurement of the second quadrature $\hat{q}$ so as to obtain a second sequence of samples,
   - generating a second sequence of bits by means of a binary encoding of the sequence of samples,
   - generating a third sequence of bits by means of a randomness extractor algorithm (205), wherein the randomness extractor algorithm (205) receives the said first sequence of bits and a parameter and reduces the bit length of the first sequence of bits in dependence on the parameter, in such a way as to generate a third sequence of bits with a randomness greater than that of said first sequence of bits, said parameter provided as an input to the randomness extractor algorithm (205) and being a function of the maximum entropy value of a random variable $Q$ associated with the second sequence of bits, wherein said parameter is calculated (204) as:

   $$log_2\left(\frac{h}{\delta q \delta p} R_{00}\left(1, \frac{\delta q \delta p}{4}\right)^{-1}\right) - H_{max}(Q)_\omega$$

   where:

   - $\delta p$ and $\delta q$ are the uncertainties of the measurements made on the first quadrature $\hat{p}$ and second quadrature $\hat{q}$,

   - the term $R_{00}\left(1, \frac{\delta q \delta p}{4}\right)$ is a prolate spheroidal radial wave function of the first kind;

   - $H_{max}(Q)_\omega = 2\, log_2\left(\sum_{i=0}^{n-1} \sqrt{Pr(Q = q_i)}\right)$ is the maximum entropy of the random variable $Q$ associated with the second quadrature $\hat{q}$ for a state $\omega$ and corresponds to a Rényi entropy of the order ½ of said random variable Q,

   - generating (206) a signal containing the third sequence of bits.

2. Method according to claim 1, in which the measurement of the second quadrature and that of the first quadrature are alternated.

3. Method according to claim 2, in which the measurements of the second quadrature and that of the first quadrature are alternated randomly or pseudo-randomly.

4. Method based on claim 1, in which the first and second quadrature are measured simultaneously.

5. Random numbers generator comprising,

measuring means (10, 10a, 10b) for measuring a continuous observable of an electromagnetic field, corresponding to a first quadrature $\hat{p}$, prepared in a quantum state,
digital conversion means (106) operatively connected to the measuring means (10, 10a, 10b) to obtain, from the measurement of said first quadrature $\hat{p}$, a first sequence of bits,
post-processing unit (108) configured to process the bits of the first sequence with a randomness extractor algorithm,

**characterized in that**:

the measuring means (10, 10a, 10b) are configured to also measure a second observable of said electromagnetic field corresponding to a second quadrature $\hat{q}$,
the conversion means (106) are designed to obtain a second sequence of bits from the measurement of said second quadrature $\hat{q}$,
the generator comprises a calculation unit (113) designed to calculate a parameter which is a function of the maximum entropy of a random variable $Q$ associated with the second sequence of bits, wherein said parameter is calculated as:

$$log_2 \left( \frac{h}{\delta q \delta p} R_{00} \left( 1, \frac{\delta q \delta p}{4} \right)^{-1} \right) - H_{max}(Q)_\omega$$

where:

- $\delta p$ and $\delta q$ are the uncertainties of the measurements made on the first quadrature $\hat{p}$ and second quadrature $\hat{q}$,

- the term $R_{00}\left(1, \frac{\delta q \delta p}{4}\right)$ is a prolate spheroidal radial wave function of the first kind,

- $H_{max}(Q)_\omega = 2\, log_2\left(\sum_{i=0}^{n-1} \sqrt{Pr(Q = q_i)}\right)$ is the maximum entropy of the random variable Q associated with the second quadrature $\hat{q}$ for a state $\omega$ and corresponds to a Rényi entropy of the order ½ of said random variable Q, and

the post-processing unit (108) is designed to process the bits of the first sequence with at least one randomness extractor algorithm in order to generate a third sequence of bits with higher randomness than the first sequence of bits, the length of which is dependent on said parameter.

6. Generator according to claim 5, wherein the measuring means (10a) are designed to simultaneously measure the two observables of the electromagnetic field (101).

7. Generator according to claim 6, wherein the measuring means comprise two homodyne (10a, 10b) or two heterodyne receivers (10a, 10b) that comprise a common local oscillator (102).

8. Generator according to claim 5, wherein the measuring means (10) are designed to measure alternately the two observables.

9. Generator according to claim 8, wherein the measuring means (10) are designed to randomly alternate the measurement of the two observables.

10. Generator according to claim 5 or 8, wherein the measuring means comprise

a homodyne (10) or heterodyne receiver (10), in which a laser (102) acts as a local oscillator,
a phase modulator (110) capable of varying the phase of the laser beam between two phase values which differ by $\frac{\pi}{2}$ as a function of a control signal.

**11.** Generator according to claim 10, wherein the control signal is a pseudo random control signal.

**12.** Generator according to claim 10, wherein the control signal depends on the third sequence of bits.

**Patentansprüche**

**1.** Verfahren zum Erzeugen eines Signals, das eine Folge von zufälligen Bits enthält, mit den Schritten:

- Messen (202) eines ersten Quadrats $\hat{p}$ eines elektromagnetischen Feldes,
- Sampling der Messung des ersten Quadrats $\hat{p}$, um eine erste Serie von Werten zu erhalten,
- Erzeugen einer ersten Bitfolge durch binäres Codieren der ersten Sequenz von Werten,
- Messen (203) eines zweiten Quadrats $\hat{q}$ des elektromagnetischen Felds,
- Abtasten der Messung des zweiten Quadrats $\hat{q}$, um eine zweite Folge von Werten zu erhalten,
- Erzeugen einer zweiten Bitfolge durch binäres Codieren der Folge von Werten,
- Erzeugen einer dritten Bitfolge mittels eines Zufallsauswahlalgorithmus (205) wobei der Zufallsauswahlalgorithmus (205) die erste Bitfolge und einen Parameter erhält und die Bitlänge der ersten Bitfolge in Abhängigkeit von dem Parameter so reduziert, dass eine dritte Bitfolge mit einer größeren Zufälligkeit als die erste Bitfolge erzeugt wird, wobei der als Eingangsgröße des Zufallsauswahlalgorithmus (205) gelieferte Parameter eine Funktion des maximalen Entropiewerts einer zufälligen Variable Q ist, die mit der zweiten Bitfolge verknüpft ist, wobei der Parameter berechnet wird (204) als:

$$log_2\left(\frac{h}{\delta q \delta p} R_{00}\left(1, \frac{\delta q \delta p}{4}\right)^{-1}\right) - H_{max}(Q)\omega$$

wobei

- $\delta p$ und $\delta q$ die Unsicherheiten der Messungen des ersten Quadrats $\hat{p}$ und des zweiten Quadrats $\hat{q}$ sind,
- der Term $R_{00}\left(1, \frac{\delta q \delta p}{4}\right)$ eine prolate spheroidale radiale Wellenfunktion erster Art ist,
- $H_{max}(Q)_\omega = 2\, log_2\left(\sum_{i=0}^{n-1} \sqrt{\Pr(Q = q_i)}\right)$ die maximale Entropie der Zufallsvariable Q ist, die mit dem zweiten Quadrat $\hat{q}$ für einen Zustand $\omega$ verknüpft ist und einer Renyi Entropie der Ordnung ½ der Zufallsvariable Q entspricht,

- Abzweigen (206) eines Signals, das die dritte Bitfolge enthält.

**2.** Verfahren nach Anspruch 1, wobei die Messung des zweiten Quadrats und des ersten Quadrats abgewechselt werden.

**3.** Verfahren nach Anspruch 2, wobei die Messungen des zweiten Quadrats und des ersten Quadrats zufällig oder pseudo zufällig abgewechselt werden.

**4.** Verfahren nach Anspruch 1, wobei das erste Quadrat und das zweite Quadrat gleichzeitig gemessen werden.

**5.** Zufallsgenerator mit
Messmitteln (10, 10a, 10b) zum Messen einer kontinuierlichen Observablen eines elektromagnetischen Felds, die einem ersten Quadrat $\hat{p}$ entspricht, das in einem Quantenzustand präpariert wurde,
digitale Umwandlungsmittel (106), die betriebsfähig mit den Messmitteln (10, 10a, 10b) verbunden sind, um aus der Messung des ersten Quadrats $\hat{p}$ eine erste Bitfolge zu erhalten,
einer Nachbereitungseinheit (108), die dafür eingerichtet ist, die Bits der ersten Folge mit einem Zufallsauswahlalgorithmus zu verarbeiten, **dadurch gekennzeichnet, dass**:

Die Messemittel (10, 10a, 10b) dafür eingerichtet sind, auch eine zweite Observable des elektromagnetischen Felds zu messen, die einem zweiten Quadrat $\hat{q}$ entspricht,
die Umwandlungsmittel (106) dafür ausgelegt sind, eine zweite Folge von Bits von der Messung des zweiten Quadrats $\hat{q}$ zu erhalten,
der Generator eine Recheneinheit (113) aufweist, die dazu vorgesehen ist, einen Parameter zu berechnen, der eine Folge der maximalen Entropie einer Zufallsvariablen Q ist, die mit der zweiten Bitfolge verknüpft ist, wobei der Parameter berechnet wird zu:

$$H_{max}(Q)_\omega = 2\,log_2\left(\sum_{i=0}^{n-1}\sqrt{\Pr(Q = q_i)}\right)$$

wobei

- $\delta p$ und $\delta q$ die Unsicherheiten der Messungen des ersten Quadrats p und des zweiten Quadrats $\hat{q}$ sind,
- der Term $R_{00}\left(1, \frac{\delta q \delta p}{4}\right)$ eine prolate spheriodiale radiale Wellenfunktion in erster Ordnung ist,
- $H_{max}(Q)_\omega = 2\,log_2\left(\sum_{i=0}^{n-1}\sqrt{\Pr(Q = q_i)}\right)$ die maximale Entropie der Zufallsvariable Q ist, die in dem zweiten Quadrat $\hat{q}$ für einen Zustand $\omega$ verknüpft ist und einer Rényi Entropie der Ordnung ½ der Zufallsvariable Q entspricht, und

die Nachbearbeitungseinheit (108) dafür ausgelegt ist, die Bits der ersten Folge mit zumindest einem Zufallsauswahlalgorithmus zu verarbeiten, um eine dritte Bitfolge mit größerer Zufälligkeit als die erste Bitfolge zu erhalten, deren Länge von dem Parameter abhängt.

6. Generator nach Anspruch 5, wobei die Messmittel (10a) dazu vorgesehen sind, gleichzeitig zwei Observablen des elektromagnetischen Felds (101) zu messen.

7. Generator nach Anspruch 6, wobei die Messmittel zwei homodyne (10a, 10b) oder zwei heterodyne Empfänger (10a, 10b), die einen gemeinsamen lokalen Oszillator (102) enthalten, aufweisen.

8. Generator nach Anspruch 5, wobei die Messmittel (10) dazu vorgesehen sind, abwechselnd die beiden Observablen zu messen.

9. Generator nach Anspruch 8, wobei die Messmittel (10) dafür ausgelegt sind, die Messung der beiden Observablen zufällig abzuwechseln.

10. Generator nach Anspruch 5 oder 8, wobei die Messmittel aufweisen:

einen homodynen (10) oder heteodyne Receiver (10), in dem ein Laser (2) als lokaler Oszillator fungiert,
einen Phasenmodulator (110), der dazu in der Lage ist, die Phase des Laserstrahls als Funktion eines Steuersignals zwischen zwei Werten zu ändern, die sich um einen Faktor von $\frac{\pi}{2}$ unterscheiden.

11. Generator nach Anspruch 10, wobei das Steuersignal ein pseudo zufälliges Steuersignal ist.

12. Generator nach Anspruch 10, wobei das Steuersignal von einer dritten Bitfolge abhängt.

**Revendications**

1. Procédé pour générer un signal comprenant une séquence de bits aléatoires, comprenant les étapes consistant à :

- mesurer (202) une première quadrature $\hat{p}$ d'un champ électromagnétique,

- échantillonner la mesure de la première quadrature $\hat{p}$ de façon à obtenir une première séquence d'échantillons,
- générer une première séquence de bits au moyen d'un codage binaire de la première séquence d'échantillons,
- mesurer (203) une seconde quadrature $\hat{q}$ du champ électromagnétique,
- échantillonner la mesure de la seconde quadrature $\hat{q}$ de façon à obtenir une seconde séquence d'échantillons,
- générer une deuxième séquence de bits au moyen d'un codage binaire de la séquence d'échantillons,
- générer une troisième séquence de bits au moyen d'un algorithme d'extraction de caractère aléatoire (205), l'algorithme d'extraction de caractère aléatoire (205) recevant ladite première séquence de bits et un paramètre et réduisant la longueur de bits de la première séquence de bits en fonction du paramètre, de façon à générer une troisième séquence de bits ayant un caractère aléatoire supérieur à celui de ladite première séquence de bits, ledit paramètre étant fourni en tant qu'entrée dans l'algorithme d'extraction de caractère aléatoire (205) et étant une fonction de la valeur d'entropie maximale d'une variable aléatoire Q associée à la deuxième séquence de bits,

ledit paramètre étant calculé (204) comme suit :

$$log_2\left(\frac{h}{\delta q \delta p} R_{00}\left(1, \frac{\delta q \delta p}{4}\right)^{-1}\right) - H_{max}(Q)_\omega$$

où :

- $\delta p$ et $\delta q$ sont les incertitudes des mesures réalisées sur la première quadrature $\hat{p}$ et la seconde quadrature $\hat{q}$,
- le terme $R_{00}\left(1, \frac{\delta q \delta p}{4}\right)$ est une fonction d'onde radiale sphéroïdale étendue du premier type ;
- $H_{max}(Q)_\omega = 2\, log_2\left(\sum_{i=0}^{n-1} \sqrt{Pr(Q = q_i)}\right)$ l'entropie maximale de la variable aléatoire Q associée à la seconde quadrature $\hat{q}$ pour un état $\omega$ et correspond à une entropie de Rényi de l'ordre 1/2 de ladite variable aléatoire Q,

- générer (206) un signal contenant la troisième séquence de bits.

2. Procédé selon la revendication 1, dans lequel la mesure de la seconde quadrature et celle de la première quadrature sont alternées.

3. Procédé selon la revendication 2, dans lequel les mesures de la seconde quadrature et celle de la première quadrature sont alternées de manière aléatoire ou pseudo-aléatoire.

4. Procédé selon la revendication 1, dans lequel les première et seconde quadratures sont mesurées simultanément.

5. Générateur de nombres aléatoires comprenant, des moyens de mesure (10, 10a, 10b) pour mesurer une variable observable continue d'un champ électromagnétique, correspondant à une première quadrature $\hat{p}$, préparée dans un état quantique,
des moyens de conversion numérique (106) connectés de manière fonctionnelle aux moyens de mesure (10, 10a, 10b) pour obtenir, à partir de la mesure de ladite première quadrature $\hat{p}$, une première séquence de bits,
une unité de post-traitement (108) configurée pour traiter les bits de la première séquence avec un algorithme d'extraction de caractère aléatoire,
**caractérisé en ce que** :

les moyens de mesure (10, 10a, 10b) sont configurés pour mesurer également une seconde variable observable dudit champ électromagnétique correspondant à une seconde quadrature $\hat{q}$,
les moyens de conversion (106) sont conçus pour obtenir une deuxième séquence de bits à partir de la mesure de ladite seconde quadrature $\hat{q}$,
le générateur comprend une unité de calcul (113) conçue pour calculer un paramètre qui est une fonction de l'entropie maximale d'une variable aléatoire Q associée à la deuxième séquence de bits, ledit paramètre étant calculé comme suit :

$$log_2 \left( \frac{h}{\delta q \delta p} R_{00} \left( 1, \frac{\delta q \delta p}{4} \right)^{-1} \right) - H_{max}(Q)_\omega$$

où :

- $\delta p$ et $\delta q$ sont les incertitudes des mesures réalisées sur la première quadrature $\hat{p}$ et la seconde quadrature $\hat{q}$,

- le terme $R_{00}\left(1, \frac{\delta q \delta p}{4}\right)$ est une fonction d'onde radiale sphéroïdale étendue du premier type ;

- $H_{max}(Q)_\omega = 2\, log_2\left(\sum_{i=0}^{n-1} \sqrt{Pr(Q = q_i)}\right)$ est l'entropie maximale de la variable aléatoire Q associée à la seconde quadrature $\hat{q}$ pour un état $\omega$ et correspond à une entropie de Rényi de l'ordre 1/2 de ladite variable aléatoire Q, et

l'unité de post-traitement (108) est conçue pour traiter les bits de la première séquence avec au moins un algorithme d'extraction de caractère aléatoire de façon à générer une troisième séquence de bits ayant un caractère aléatoire supérieur à celui de la première séquence de bits, dont la longueur dépend dudit paramètre.

6. Générateur selon la revendication 5, dans lequel les moyens de mesure (10a) sont conçus pour mesurer simultanément les deux variables observables du champ électromagnétique (101).

7. Générateur selon la revendication 6, dans lequel les moyens de mesure comprennent deux récepteurs homodynes (10a, 10b) ou deux récepteurs hétérodynes (10a, 10b) qui comprennent un oscillateur local commun (102).

8. Générateur selon la revendication 5, dans lequel les moyens de mesure (10) sont conçus pour mesurer de manière alternée les deux variables observables.

9. Générateur selon la revendication 8, dans lequel les moyens de mesure (10) sont conçus pour alterner de manière aléatoire la mesure des deux variables observables.

10. Générateur selon la revendication 5 ou 8, dans lequel les moyens de mesure comprennent
un récepteur homodyne (10) ou hétérodyne (10), dans lequel un laser (102) agit comme un oscillateur local,
un modulateur de phase (110) capable de faire varier la phase du faisceau laser entre deux valeurs de phase qui diffèrent de $\frac{\pi}{2}$ en fonction d'un signal de commande.

11. Générateur selon la revendication 10, dans lequel le signal de commande est un signal de commande pseudo-aléatoire.

12. Générateur selon la revendication 10, dans lequel le signal de commande dépend de la troisième séquence de bits.

Fig. 1

PRIOR ART

200

```
┌─────────────────────┐
│   Quantum state     │
│    preparation      │
└─────────────────────┘
```

201

```
      ◇ Random or ◇
      pseudo-random
         choice
```

Measurement basis
...1001010...          202          203          Check basis
                                                 ...1011010...

```
┌─────────────────────┐
│                     │
```

204          Estimation
             Conditional Min-
             entropy

205

```
┌─────────────────────┐
│  Post-Processing    │
└─────────────────────┘
```

206

```
┌─────────────────────┐
│      Random         │
│     Numbers         │
└─────────────────────┘
```

Fig. 2

Fig. 3

Fig. 4

Fig. 5 a

Fig. 5 b

Fig. 5 c

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7284024 B1
- US 7284024 B

**Non-patent literature cited in the description**

- **C. GABRIEL ; C. WITTMANN ; D. SYCH ; R. DONG ; W. MAUERER ; U. L. ANDERSEN ; C. MARQUARDT ; G. LEUCHS.** *Nat. Photonics,* 2010, vol. 4, 711
- **T. SYMUL ; S. M. ASSAD ; P. K. LAM.** *Appl. Phys. Lett.,* 2011, vol. 2
- **Y. SHEN ; L. TIAN ; H. ZOU.** *Physical Review A,* 2010, vol. 81
- **F. FURRER ; M. BERTA ; M. TOMAMICHEL ; V. B. SCHOLZ ; M. CHRISTANDL.** *J. Math. Phys.,* 2014, vol. 55, 122205
- **J. SHAPIRO ; S. WAGNER.** *IEEE J. Quantum Electron.,* 1984, vol. 20, 803
- **HAUS, HERMANN A.** Electromagnetic noise and quantum optical measurements. Springer Science & Business Media, 2000